# FASCICULE DE BREVET EUROPEEN

(11) **EP 2 649 749 B1**
(45) Date de publication et mention de la délivrance du brevet: **26.08.2020**
(21) Numéro de dépôt: 11805091.3
(22) Date de dépôt: 05.12.2011
(51) Int. Cl.: H04L 29/08

(54) **PROCEDE DE COLLECTE ET DE TRAITEMENT D'INFORMATIONS REPRESENTATIVES DE CONDITIONS DE FONCTIONNEMENT D'UN EQUIPEMENT**
VERFAHREN ZUR SAMMLUNG UND VERARBEITUNG VON FUNKTIONSSTATUSINFORMATIONEN EINER VORRICHTUNG
METHOD OF COLLECTING AND PROCESSING INFORMATION REPRESENTATIVE OF THE FUNCTIONAL STATE OF AN APPARATUS

(30) Priorité: 10.12.2010 FR 1060395
(43) Date de publication de la demande: 16.10.2013
(73) Titulaire: ORANGE, 75015 Paris (FR)
(72) Inventeur: LANDAIS, Gilbert, F-35530 Servon Sur Vilaine (FR); GLOANEC, Simon, F-35000 Rennes (FR)
(74) Mandataire: Vidon Brevets & Stratégie
(86) Numéro de dépôt international: PCT/FR2011/052864
(87) Numéro de publication internationale: WO 2012/076795

(56) Documents cités:
- WO-A1-2009/067057
- US-A- 6 006 260
- US-A1- 2003 134 631
- US-A1- 2005 213 509
- US-A1- 2007 232 290
- US-A1- 2009 086 643
- US-A1- 2009 138 578

## Description

### 1. Domaine de l'invention

L'invention concerne un procédé de communication, à un équipement distant, d'informations relatives à des conditions de fonctionnement d'un équipement local.

De tels procédés sont couramment utilisés par des opérateurs de services de télécommunication pour quantifier la qualité de service effectivement fournie à des clients qui sont abonnés à ces services. Ces procédés ont notamment vocation à permettre l'identification de disfonctionnements survenant au sein d'équipements installés chez les clients, dans une démarche permanente d'amélioration de la qualité perçue par ces clients.

Les équipements locaux dont les conditions de fonctionnement sont surveillées par l'équipement distant peuvent être de diverses natures, et consister par exemple en des passerelles domestiques, des boîtiers décodeurs de signaux de télévision numérique, etc., et sont donc susceptibles de provenir de multiples fabricants. Les équipements distants sont distincts des équipements locaux et sont reliés à ces derniers soit via un même réseau local, soi via un réseau distant, par exemple de type Internet. En vue d'assurer une interopérabilité entre équipements locaux et équipements distants, il s'est avéré nécessaire de formaliser des protocoles dans lesquels est notamment définie la nature des informations qui doivent être générées par un équipement local en vue d'une transmission à un équipement distant.

### 2. Art antérieur

En l'état actuel de la technique, il est prévu de munir chaque équipement local de très nombreuses fonctions de calcul prédéterminées. Une telle fonction de calcul est destinée par exemple à générer une valeur représentative d'un comptage d'occurrences d'un certain type d'événement par intervalles de temps de durée prédéterminée, par exemple un nombre de redémarrages intempestifs qu'a dû subir l'équipement local au cours d'un intervalle de vingt jours, ou encore un nombre de paquets de données perdus au cours d'un intervalle de 10 minutes, etc. Selon un autre exemple, une telle fonction de calcul est destinée à générer diverses autres valeurs statistiques et/ou d'indicateurs, telles qu'en particulier une valeur minimale/maximale, une valeur moyenne ou un dépassement d'un seuil d'un paramètre particulier (température, tension, intensité, etc...).

Selon la technique connue, une fois ces fonctions de calcul définies et implémentées dans un équipement local, il n'est en principe pas envisageable de faire procéder audit équipement local à d'autres calculs en vue de lui faire générer des informations autres que celles pour la production desquelles il a été configuré. Ainsi, par mesure de précaution, les protocoles existants ont été conçus pour recenser de façon quasi-exhaustive toutes les valeurs qui peuvent avoir un intérêt pour un équipement distant, de sorte que le nombre de fonctions de calcul à implémenter au sein des équipements locaux est tellement élevé qu'il devient prohibitif, si bien que la technique de l'observation des conditions de fonctionnement d'équipements locaux par des équipements distants n'est pas encore véritablement opérationnelle et ne progresse que très lentement vers cet objectif.

Les documents de brevet WO 2009/067057, US 2007/0232290 et US 2003/0134631 portent chacun sur une technique consistant à faire réaliser à distance, par des équipements distants, une analyse et un traitement des paramètres mesurés par des équipements locaux, afin de suivre, à distance, l'évolution des conditions de fonctionnement des équipements locaux.

US 2009/138578 A1 divulgue le rapportage des exceptions relative à un paramètre à un dispositif distant.

conçus pour recenser de façon quasi-exhaustive toutes les valeurs qui peuvent avoir un intérêt pour un équipement distant, de sorte que le nombre de fonctions de calcul à implémenter au sein des équipements locaux est tellement élevé qu'il devient prohibitif, si bien que la technique de l'observation des conditions de fonctionnement d'équipements locaux par des équipements distants n'est pas encore véritablement opérationnelle et ne progresse que très lentement vers cet objectif.

### 3. Objectifs de l'invention

La présente invention propose une solution qui ne présente pas les inconvénients précités, en proposant un procédé et un équipement dans lesquels il n'est pas nécessaire d'implémenter à l'avance un grand nombre de fonctions de calcul de valeurs représentatives des conditions de fonctionnement dudit équipement.

### 4. Exposé de l'invention

En effet, selon un aspect fonctionnel, l'invention concerne un procédé selon la revendication indépendante 1 conforme au paragraphe introductif caractérisé en ce qu'il inclut :
- une étape de mesure d'au moins une valeur d'un paramètre primitif représentatif desdites conditions de fonctionnement, et
- une étape de traitement dudit paramètre par une unité de calcul apte à exécuter une pluralité d'opérations de calcul.

L'unité de calcul confère au procédé conforme à l'invention une grande souplesse d'utilisation, puisqu'elle permet de calculer n'importe quelle grandeur sur la base des valeurs des paramètres primitifs. Il n'est ainsi plus nécessaire de prédéfinir et d'implémenter physiquement des fonctions complexes en grand nombre comme dans l'état de la technique, puisque l'unité de calcul est apte à être programmée de façon dynamique pour réaliser tout type de calcul.

L'étape de traitement peut être effectuée aussi bien dans l'équipement distant que dans l'équipement local.

Cependant, dans des applications où l'équipement local et l'équipement distant sont reliés ensemble via un réseau de communication présentant une bande passante limitée, ce qui est très courant, il sera avantageux de faire réaliser par l'équipement local une analyse de premier niveau, et de ne prévoir de transmission d'informations vers le serveur distant que dans des cas où certains évènements prédéterminés se seront produits.

Ainsi, dans un mode de mise en œuvre avantageux de l'invention, un procédé de communication tel que décrit plus haut est caractérisé en ce qu'il inclut une étape de transmission à destination dudit équipement distant d'une notification générée lorsque l'étape de traitement produit un résultat conforme à un critère prédéterminé.

Un tel critère prédéterminé pourra consister en une température de fonctionnement maximale ou minimale, en un nombre de paquets perdus maximal acceptable pour un intervalle de temps donné, etc.

L'unité de calcul comportera en principe un noyau essentiel de fonctions de calcul basiques, telles les opérations mathématiques et logiques élémentaires, de sorte que cette unité de calcul sera apte à traiter des nombres, des chaînes de caractères et des valeurs booléennes. Munie de ce noyau essentiel, l'unité de calcul sera également apte à réaliser des calculs statistiques élémentaires tels la détermination de valeurs minimales, maximales, moyennes, etc.

L'unité de calcul conforme à l'invention sera avantageusement configurable dynamiquement par voie logicielle en vue de permettre à l'équipement local de réaliser tout type de calcul qui pourrait produire une information présentant un intérêt pour l'équipement distant.

Dans un tel mode de mise en œuvre, un procédé tel que décrit plus haut inclura au moins une étape de configuration logicielle de l'unité de calcul par incorporation, au sein de ladite pluralité d'opérations de calcul, d'au moins une fonction de calcul ayant au moins un paramètre primitif pour variable.

Les fonctions de calcul pourront être définies une par une, mais elles pourront parfois aussi être générées de façon automatique ou semi-automatique. Ainsi, selon un mode de mise en œuvre particulier de l'invention, un procédé tel que décrit ci-dessus inclura au moins une étape de saisie d'un paramètre et une étape de déclinaison automatique dudit paramètre en une série de fonctions prédéterminées ayant ce paramètre pour variable.

Dans ce mode de mise en œuvre, il suffira de saisir un paramètre pour générer une famille de fonctions relatives à ce paramètre, par exemple une fonction «Min» donnant la valeur minimale atteinte par ce paramètre, une fonction «MinTime» donnant la date et l'heure auxquelles cette valeur minimale a été atteinte, une fonction «Max» donnant la valeur minimale atteinte par ce paramètre et une fonction «MaxTime» donnant la date et l'heure auxquelles cette valeur maximale a été atteinte. Ainsi, sur la base d'un seul paramètre primitif, quatre valeurs représentatives de conditions de fonctionnement de l'équipement local seront automatiquement générées.

Selon un aspect matériel, l'invention concerne également un équipement local selon la revendication indépendante 2 apte à communiquer à un équipement distant des informations relatives aux conditions de fonctionnement dudit équipement local, caractérisé en ce qu'il inclut :
- des moyens de mesure d'au moins une valeur d'un paramètre primitif représentatif desdites conditions de fonctionnement, et
- des moyens de traitement dudit paramètre comprenant une unité de calcul apte à exécuter une pluralité d'opérations de calcul.

Selon un autre aspect matériel, l'invention concerne également un système de communication incluant au moins un équipement local conforme à la description qui précède et un serveur distant destiné à recevoir des informations relatives aux conditions de fonctionnement dudit équipement local.

Selon un autre aspect matériel, l'invention concerne également un programme d'ordinateur caractérisé en ce qu'il comprend des instructions de code de programme pour la mise en œuvre d'un procédé selon la revendication 1 lorsque ce programme est exécuté par un processeur.

### 5. Liste des figures

D'autres caractéristiques et avantages de l'invention apparaîtront plus clairement à la lecture de la description suivante d'un mode de réalisation particulier, donné à titre de simple exemple illustratif et non-limitatif, et des dessins annexés, parmi lesquels :
- la figure 1 est un diagramme fonctionnel qui représente un système de communication dans lequel l'invention est mise en œuvre ;
- la figure 2 est un diagramme fonctionnel qui représente une variante de réalisation d'un tel système de communication ; et
- la figure 3 est un diagramme fonctionnel qui représente un équipement conforme à l'invention.

### 6. Description d'un mode de réalisation de l'invention

### 6.1 Principe général

Le principe général de l'invention repose sur une intégration, au sein d'un équipement, d'une unité de calcul apte à réaliser des opérations mathématiques, statistiques et logiques élémentaires, en vue de produire une multiplicité de grandeurs représentatives de conditions de fonctionnement dudit équipement sur la base de valeurs de paramètres primitifs, sans qu'il soit nécessaire de prédéfinir et d'implémenter physiquement des fonctions complexes en grand nombre comme dans l'état de la technique.

### 6.2 Description d'un mode de mise en œuvre

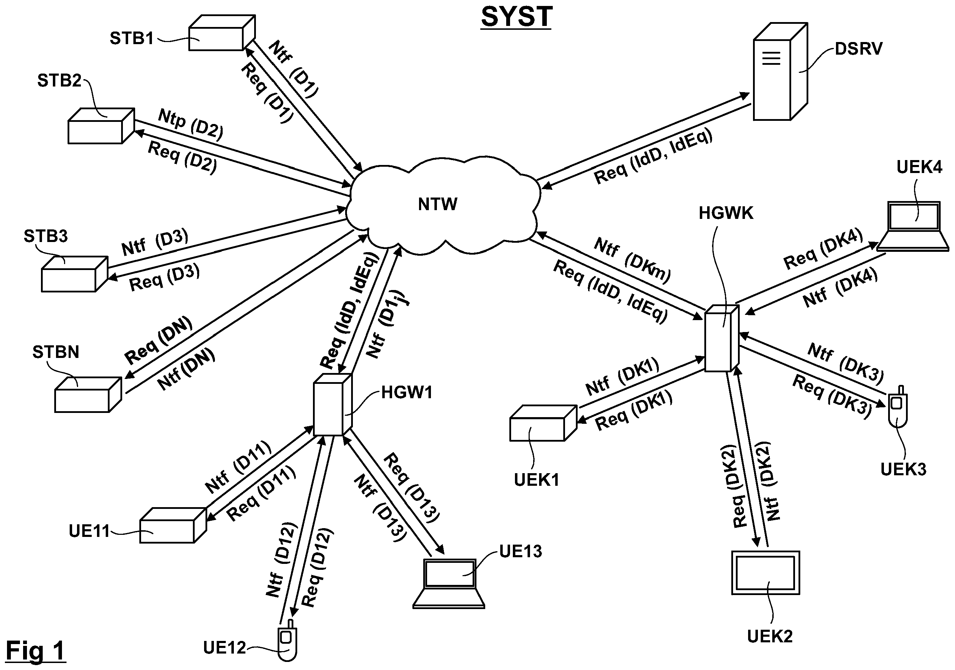

La **FIG.1** illustre un mode de mise en œuvre de l'invention au sein d'un système de télécommunication SYST, qui inclut N équipements dits locaux STB1, STB2, STB3...STBN reliés à un équipement distant DSRV *via* un réseau de communication NTW, par exemple un réseau conforme au protocole Internet. Les équipements locaux STBi (pour i=1 à N) sont dans cet exemple des boîtiers-décodeurs de signaux numériques de télévision installés dans des domiciles d'abonnés à un service de diffusion de programmes audiovisuels, tandis que l'équipement distant DSRV est un serveur destiné à assurer un suivi de la qualité de service perçue par lesdits abonnés. A cette fin, chaque équipement local inclut dans cet exemple :
- des moyens de mesure d'au moins une valeur d'un paramètre primitif Di (pour i=1 à N) représentatif desdites conditions de fonctionnement, et
- des moyens de traitement dudit paramètre Di (pour i=1 à N) comprenant une unité de calcul apte à exécuter une pluralité d'opérations de calcul.

Dans l'exemple représenté ici, chacun des équipements locaux STBi (pour i=1 à N) procède à une analyse de premier niveau, et ne transmet des informations vers l'équipement distant DSRV que dans des cas où un évènement prédéterminé s'est produit. Ceci permet d'éviter une consommation inutilement importante de bande passante que représenterait un envoi systématique par chaque équipement local STBi (pour i=1 à N) des valeurs prises par le ou les paramètres primitifs dont il doit rendre compte de l'évolution à l'équipement distant DSRV.

Ainsi, un équipement local STBi (pour i=1 à N) émettra à destination dudit équipement distant DSRV une notification Ntf(Di) qui sera générée lorsque l'étape de traitement du paramètre primitif Di produira un résultat conforme à un critère prédéterminé.

Un tel critère prédéterminé pourra consister en une température de fonctionnement maximale ou minimale si le paramètre Di représente la température de fonctionnement de l'équipement local STBi (pour i=1 à N), ou encore en un nombre de paquets perdus maximal acceptable pour un intervalle de temps donné si le paramètre Di représente un nombre de paquets comptabilisés comme perdus par l'équipement local STBi (pour i=1 à N), etc. Bien que cela n'apparaisse pas explicitement sur la présente figure pour que la compréhension de celle-ci n'en soit pas rendue inutilement compliquée, chaque équipement local assurera en principe une mesure et un traitement d'une multiplicité de paramètres et rendra compte du résultat de ces opérations à l'équipement distant DSRV au moyen de multiples notifications semblables aux notifications Ntf(Di) (pour i=1 à N) qui sont représentées ici.

L'émission d'une notification Ntf(Di) interviendra en règle générale spontanément, c'est-à-dire à la propre initiative de l'équipement local concerné. Toutefois, dans le mode de mise en œuvre de l'invention décrit ici, l'équipement distant DSRV est apte à émettre des requêtes d'accès en lecture Req(IdD, IdEq) de toute donnée D identifiée par un identifiant IdD qui fait l'objet d'un traitement au sein d'un équipement local identifié par identifiant IdEq. De telles requêtes pourront être émises de façon automatique et périodique, selon une technique connue de l'homme du métier sous l'appellation d'origine anglo-saxonne « polling », mais des requêtes de ce genre pourront également être émises de façon non-automatique et apériodique, par exemple sur ordre d'un téléopérateur qui voudrait procéder à un relevé de données au cours d'une procédure de dépannage ou de maintenance à distance.

Toute requête d'accès en lecture Req(IdD, IdEq) émise par l'équipement distant DSRV est ensuite routée par le réseau NTW vers l'équipement local STBi correspondant à l'identifiant IdEq, auquel ladite requête parvient sous forme d'un signal Req(Di).

Dans l'exemple de mise en œuvre illustré par la présente figure, le système de communication SYST inclut en outre une pluralité de passerelles domestiques HGW1...HGWK, chacune assurant ici la gestion d'un réseau local sans fil. Ainsi, la passerelle domestique HGW1 est reliée *via* des liaisons de type Wi-Fi, CPL ou autres à des équipements locaux UE11, UE12 et UE13, constitués dans cet exemple respectivement par un boitier-décodeur, un téléphone de type DECT et un ordinateur personnel. La passerelle domestique HGWK est reliée *via* des liaisons de type Wi-Fi, CPL ou autres à des équipements locaux UEK1, UEK2, UEK3 et UEK4, constitués dans cet exemple respectivement par un boitier-décodeur, tablette communicante, un téléphone de type DECT et un ordinateur personnel. Dans cette configuration, les passerelles domestiques FIGW1...FIGWK sont des équipements distincts des équipements locaux UE1j (pour j=1 à 3)... UEKm (pour m=1 à 4) et peuvent être considérés comme des équipements distants par rapport auxdits équipements locaux, tout en étant elles-mêmes des équipements qui peuvent être considérés comme locaux par rapport à l'équipement distant DSRV. En d'autres termes, on peut considérer que les passerelles domestiques HGW1...HGWK sont des équipements distants de premier niveau par rapport aux équipements locaux UE1j (pour j=1 à 3)... UEKm (pour m=1 à 4), l'équipement DSRV étant un équipement distant de deuxième niveau par rapport aux équipements locaux UE1j (pour j=1 à 3)...UEKm (pour m=1 à 4).

De façon analogue au mode de fonctionnement décrit plus haut, les passerelles domestiques HGW1...HGWK sont destinées à émettre à destination dudit équipement distant DSRV des notifications Ntf(D1j)... Ntf(DKm) qui sont, dans le mode de réalisation décrit en **FIG.1**, générées par les équipements locaux UE1j (pour j=1 à 3))...UEKm (pour m=1 à 4) lorsque des étapes de traitement de paramètres primitifs D1j...DKm exécutées au sein desdits équipements locaux produiront des résultats conformes à des critères prédéterminés.

En outre, lorsque l'équipement distant DSRV émet une requête d'accès en lecture Req(IdD, IdEq) d'une valeur d'un paramètre primitif D1j...DKm suivi par l'un des équipements locaux UE1j (pour j=1 à 3))...UEKm (pour m=1 à 4), cette requête est routée par le réseau NTW vers celle des passerelles domestiques HGW1...HGWK qui gère l'équipement local concerné et transmise par ladite passerelle domestique à l'équipement local correspondant à l'identifiant IdEq sous forme d'un signal Req(D1j)...Req(DKm).

### 6.3 Description d'une variante de mise en œuvre

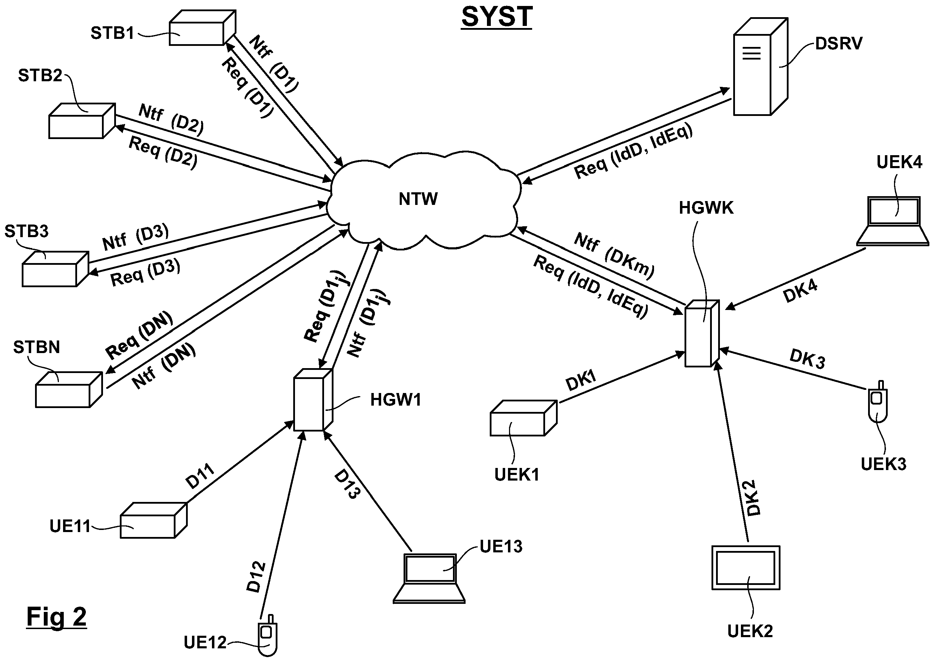

La **FIG.2** illustre une variante de mise en œuvre dans laquelle les réseaux locaux gérés par les passerelles domestiques HGW1...HGWK disposent de suffisamment de bande passante pour autoriser un important volume de communication de données. Selon cette variante, il n'est pas nécessaire que les équipements locaux UE1j (pour j=1 à 3)...UEKm (pour m=1 à 4) intègrent à la fois des moyens de mesure de paramètres primitifs et des moyens de traitement desdits paramètres, puisque l'importante bande passante disponible autorise une transmission systématique aux passerelles domestiques, et sans traitement préalable par les équipements locaux, des valeurs de paramètres D1j...DKm mesurées par lesdits équipements. Dans un tel réseau local, le traitement est alors assuré de manière centralisée par la passerelle qui inclut à cet effet des moyens de traitement dont les équipements locaux peuvent donc être soulagés.

Dans une telle configuration, lorsque l'équipement distant DSRV émet une requête d'accès en lecture Req(IdD, IdEq) d'une valeur d'un paramètre primitif D1j...DKm suivi par l'un des équipements locaux UE1j (pour j=1 à 3))...UEKm (pour m=1 à 4), cette requête est routée par le réseau NTW vers celle des passerelles domestiques HGW1...HGWK qui gère l'équipement local concerné et transmise à ladite passerelle domestique sous forme d'un signal Req(D1j)...Req(DKm), cette requête n'ayant pas à être ensuite répercutée par ladite passerelle vers l'équipement local concerné puisque la passerelle domestique contient déjà toutes les valeurs mesurées par les équipements locaux gérés par cette passerelle.

### 6.4 Description d'un mode de réalisation

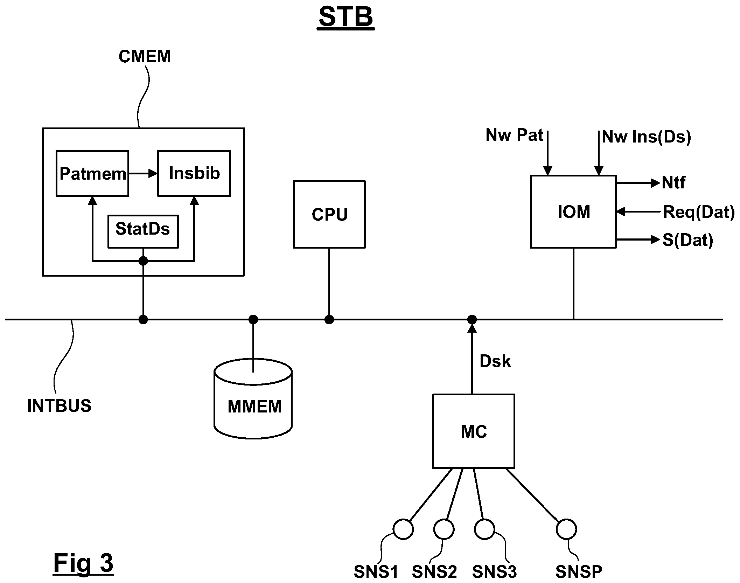

La **FIG.3** représente un mode de réalisation possible de moyens de traitement inclus dans un équipement local STB semblable à ceux évoqués ci-dessus. Dans cet exemple de réalisation, les moyens de traitement incluent une unité centrale de traitement CPU à base de microprocesseur, et une mémoire cache CMEM, et sont destinés à communiquer *via* un bus INTBUS avec un microcontrôleur MC, une mémoire de masse MMEM, et des moyens d'entrée/sortie IOM.

Le microcontrôleur MC est relié à une multiplicité de capteurs SNS1, SNS2, SNS3...SNSP, dont chacun est apte à mesurer une valeur Dsk (pour k=1 à P) d'un paramètre primitif représentatif des conditions de fonctionnement de l'équipement STB, par exemple une date, une température de fonctionnement, une tension ou un courant d'alimentation, etc. Le microcontrôleur MC est ainsi apte à restituer en temps réel une multiplicité de valeurs Dsk adoptées par lesdits paramètres primitifs, lesquelles valeurs étant transmises *via* le bus INTBUS à la mémoire de cache MMEM pour y être stockées au fil du temps.

En configuration de fonctionnement, des instructions définissant des fonctions de calcul ayant au moins un paramètre primitif pour variable sont stockées dans la mémoire cache CMEM au sein d'une bibliothèque d'instructions Insbib en vue d'être exécutées par l'unité centrale de traitement CPU. En cours d'exécution de ces instructions, l'unité centrale de traitement CPU extrait en tant qu'opérandes les valeurs Dsk des paramètres primitifs pertinents préalablement mémorisées dans la mémoire de masse MMEM et stocke le résultat des calculs dans un répertoire StatDs. Lorsque chaque résultat d'une fonction de calcul fait lui-même l'objet d'un calcul, défini par au moins une instruction incluse dans la bibliothèque d'instructions Insbib, l'unité centrale de traitement CPU détermine si ce résultat est ou non conforme à un critère prédéterminé. Dans l'affirmative, l'unité centrale de traitement CPU génère une notification Ntf et la fait parvenir *via* le bus INTBUS aux moyens d'entrée/sortie IOM afin que ladite notification Ntf soit émise à destination de l'équipement distant.

Par ailleurs, les moyens d'entrée/sortie IOM sont également aptes à recevoir en provenance de l'équipement distant des requêtes Req(Dat) d'accès en lecture aux valeurs Dsk et/ou aux données contenues dans le répertoire StatDs, et à émettre à destination de l'équipement distant des signaux de données S(Dat) représentatifs de données auxquelles un accès en lecture a été requis par ledit équipement distant.

La bibliothèque d'instructions Insbib incluse dans les moyens de traitement représentés ici comporte un noyau essentiel de fonctions de calcul basiques, telles les opérations mathématiques et logiques élémentaires, de sorte que ces moyens de traitement seront aptes à traiter des nombres, des chaînes de caractères et des valeurs booléennes. Munis de ce noyau essentiel, les moyens de traitement seront également aptes à réaliser des calculs statistiques élémentaires tels la détermination de valeurs minimales, maximales, moyennes, etc.

Les moyens de traitement représentés ici sont en outre configurable dynamiquement par voie logicielle en vue de permettre à l'équipement local STB de réaliser tout type de calcul qui pourrait produire une information présentant un intérêt pour l'équipement distant.

Ainsi, les moyens de traitement sont aptes à incorporer au sein de ladite bibliothèque d'instructions Insbib, *via* les moyens d'entrée/sortie IOM, de nouvelles fonctions de calcul ayant au moins un paramètre primitif pour variable.

Ces fonctions de calcul pourront être définies une par une au moyen de nouvelles instructions NwIns(Ds), qui pourront par exemple être téléchargées par l'équipement local STB sur commande de l'équipement distant, mais elles pourront parfois aussi être générées de façon automatique ou semi-automatique. Ainsi, selon un mode de mise en œuvre particulier de l'invention, l'équipement local STB pourra télécharger et mémoriser dans un répertoire de modèles Patmem un modèle de déclinaison NwPat d'un ou plusieurs paramètres, qui, lorsqu'il sera appliqué à un ou plusieurs paramètres donnés, permettra une déclinaison automatique du ou desdits paramètres en une série de fonctions prédéterminées ayant ce ou ces paramètres pour variable.

Dans ce mode de mise en œuvre, il suffira ensuite de saisir un paramètre en relation avec un modèle de déclinaison inclus dans le répertoire de modèles Patmem pour générer une famille de fonctions relatives à ce paramètre. Un modèle de déclinaison appliqué à un paramètre donné pourra par exemple inclure une fonction «Min» donnant la valeur minimale atteinte par ce paramètre, une fonction «MinTime» donnant la date et l'heure auxquelles cette valeur minimale a été atteinte, une fonction «Max» donnant la valeur minimale atteinte par ce paramètre et une fonction «MaxTime» donnant la date et l'heure auxquelles cette valeur maximale a été atteinte. Ainsi, sur la base d'un seul paramètre primitif, quatre valeurs représentatives de conditions de fonctionnement de l'équipement local seront automatiquement générées.

L'invention offre ainsi une grande souplesse d'utilisation, puisqu'elle permet de calculer n'importe quelle grandeur sur la base des valeurs des paramètres primitifs. Il n'est ainsi plus nécessaire de prédéfinir et d'implémenter physiquement des fonctions complexes en grand nombre comme dans l'état de la technique, puisque les moyens de traitement sont aptes à être programmés de façon dynamique pour réaliser tout type de calcul.

## Revendications

1. Procédé de communication, à un équipement distant (DSRV), d'informations relatives à des conditions de fonctionnement d'un équipement local (STBN), ledit procédé comprenant:
- une étape de configuration logicielle d'une unité de calcul de l'équipement local apte à exécuter une pluralité d'opérations de calcul par incorporation d'une série de fonctions de calcul ayant au moins un paramètre primitif (Di) pour variable,
- une étape de mesure, par ledit équipement local, d'au moins une valeur dudit au moins un paramètre primitif représentatif desdites conditions de fonctionnement,
- une étape de traitement, par ledit équipement local, utilisant ladite série de fonctions de calcul ayant ladite au moins une valeur mesurée pour variable et produisant un résultat,
- une étape de transmission à destination dudit équipement distant d'une notification (Ntf(Di)) relative audit au moins un paramètre primitif et générée lorsque ledit résultat est conforme à un critère prédéterminé, pour ledit au moins un paramètre primitif donné, ladite série de fonctions de calcul est générée à partir d'un modèle de déclinaison prédéfini relatif audit paramètre primitif donné.

2. Equipement local (STBN) apte à communiquer à un équipement distant (DSRV) des informations relatives aux conditions de fonctionnement dudit équipement local, comprenant :
- des moyens de configuration logicielle d'une unité de calcul aptes à exécuter une pluralité d'opérations de calcul par incorporation d'une série de fonctions de calcul ayant au moins un paramètre primitif (Di) pour variable,
- des moyens de mesure d'au moins une valeur dudit au moins un paramètre primitif représentatif desdites conditions de fonctionnement,
- des moyens de traitement prenant en compte ladite série de fonctions de calcul ayant ladite au moins une valeur mesurée pour variable et produisant un résultat,
- des moyens de transmission à destination dudit équipement distant d'une notification (Ntf(Di)) relative audit au moins un paramètre primitif et générée en tenant compte dudit résultat en fonction d'un critère prédéterminé ;
et pour ledit au moins un paramètre primitif donné, lesdits moyens de configuration logicielle sont aptes à tenir compte d'un modèle de déclinaison prédéfini relatif audit paramètre donné pour générer ladite série de fonctions de calcul.

3. Système de communication incluant au moins un équipement local conforme à la revendication 2 et un serveur distant destiné à recevoir des informations relatives aux conditions de fonctionnement dudit équipement local.

4. Programme d'ordinateur **caractérisé en ce qu'**il comprend des instructions de code de programme pour la mise en œuvre d'un procédé selon la revendication 1 lorsque ce programme est exécuté par un processeur.

## Patentansprüche

1. Verfahren zur Übermittlung, an eine entfernte Einrichtung (DSRV), von Informationen, die sich auf Betriebsbedingungen einer lokalen Einrichtung (STBN) beziehen, wobei das Verfahren umfasst:
- einen Schritt der Softwarekonfiguration einer Recheneinheit der lokalen Einrichtung, die geeignet ist, mehrere Rechenoperationen durch Einbeziehung einer Reihe von Rechenfunktionen auszuführen, die wenigstens einen primitiven Parameter (Di) als Variable haben,
- einen Schritt der Messung, durch die lokale Einrichtung, wenigstens eines Wertes des wenigstens einen primitiven Parameters, der für die Betriebsbedingungen repräsentativ ist,
- einen Schritt der Verarbeitung durch die lokale Einrichtung, in dem die Reihe von Rechenfunktionen verwendet wird, die den wenigstens einen gemessenen Wert als Variable haben, und ein Ergebnis erzeugt wird,
- einen Schritt der Übertragung, an die entfernte Einrichtung, einer Benachrichtigung (Ntf(Di)), die sich auf den wenigstens einen primitiven Parameter bezieht und erzeugt wird, wenn das Ergebnis mit einem vorbestimmten Kriterium konform ist,
wobei für den wenigstens einen gegebenen primitiven Parameter die Reihe von Rechenfunktionen aus einem vordefinierten Abwandlungsmodell erzeugt wird, das sich auf den gegebenen primitiven Parameter bezieht.

2. Lokale Einrichtung (STBN), die geeignet ist, an eine entfernte Einrichtung (DSRV) Informationen zu übermitteln, die sich auf die Betriebsbedingungen der lokalen Einrichtung beziehen, umfassend:
- Mittel zur Softwarekonfiguration einer Recheneinheit, die geeignet sind, mehrere Rechenoperationen durch Einbeziehung einer Reihe von Rechenfunktionen auszuführen, die wenigstens einen primitiven Parameter (Di) als Variable haben,
- Mittel zur Messung wenigstens eines Wertes des wenigstens einen primitiven Parameters, der für die Betriebsbedingungen repräsentativ ist,
- Mittel zur Verarbeitung, welche die Reihe von Rechenfunktionen berücksichtigen, die den wenigstens einen gemessenen Wert als Variable haben, und ein Ergebnis erzeugen,
- Mittel zur Übertragung, an die entfernte Einrichtung, einer Benachrichtigung (Ntf(Di)), die sich auf den wenigstens einen primitiven Parameter bezieht und unter Berücksichtigung des Ergebnisses in Abhängigkeit von einem vorbestimmten Kriterium erzeugt wird;
und wobei für den wenigstens einen gegebenen primitiven Parameter die Mittel zur Softwarekonfiguration geeignet sind, ein vordefiniertes Abwandlungsmodell zu berücksichtigen, das sich auf den gegebenen Parameter bezieht, um die Reihe von Rechenfunktionen zu erzeugen.

3. Kommunikationssystem, welches wenigstens eine lokale Einrichtung gemäß Anspruch 2 und einen entfernten Server, der dazu bestimmt ist, Informationen zu empfangen, die sich auf die Betriebsbedingungen der lokalen Einrichtung beziehen, umfasst.

4. Computerprogramm, **dadurch gekennzeichnet, dass** es Programmcodeanweisungen zur Durchführung eines Verfahrens nach Anspruch 1, wenn dieses Programm von einem Prozessor ausgeführt wird, umfasst.

## Claims

1. Method for communicating, to a remote equipment (DSRV), information relating to conditions of operation of a local equipment (STBN), said method comprising:
- a step of software configuration of a computation unit of the local equipment capable of executing a plurality of computation operations by incorporation of a series of computation functions having at least one primitive parameter (Di) for a variable,
- a step of measurement, by said local equipment, of at least one value of said at least one primitive parameter representative of said conditions of operation,
- a step of processing, by said local equipment, using said series of computation functions having said at least one measured value for variable and producing a result,
- a step of transmission, to said remote equipment, of a notification (Ntf(Di)) relating to said at least one primitive parameter and generated when said result conforms to a predetermined criterion, for said at least one given primitive parameter, said series of computation functions is generated from a predefined declination model relating to said given primitive parameter.

2. Local equipment (STBN) capable of communicating, to a remote equipment (DSRV), information relating to the conditions of operation of said local equipment, comprising:
- software configuration means for a computation unit that are capable of executing a plurality of computation operations by incorporation of a series of computation functions having at least one primitive parameter (Di) for variable,
- means for measuring at least one value of said at least one primitive parameter representative of said conditions of operation,
- processing means taking account of said series of computation functions having said at least one measured value for variable and producing a result,
- means for transmitting, to said remote equipment, a notification (Ntf(Di)) relating to said at least one primitive parameter and generated by taking account of said result according to a predetermined criterion;
and, for said at least one given primitive parameter, said software configuration means are capable of taking account of a predefined declination model relating to said given parameter to generate said series of computation functions.

3. Communication system including at least one local equipment according to Claim 2 and a remote server intended to receive information relating to the conditions of operation of said local equipment.

4. Computer program, **characterized in that** it comprises program code instructions for implementing a method according to Claim 1 when this program is run by a processor.
